# EUROPÄISCHE PATENTANMELDUNG

(11) **EP 0 714 733 A1**
(43) Veröffentlichungstag der Anmeldung: **05.06.1996**
(21) Anmeldenummer: 95116704.8
(22) Anmeldetag: 24.10.1995
(51) Int. Cl.: B24D 18/00, B24B 53/12

(54) **Verfahren zur Herstellung von Einkegelscheiben, insbesondere Abrichtscheiben**

(30) Priorität: 03.12.1994 DE 4443074
(71) Anmelder: ERNST WINTER & SOHN Diamantwerkzeuge GmbH & Co., D-22844 Norderstedt (DE)
(72) Erfinder: Watzlaw, Hans-Jürgen, D-24568 Kattendorf (DE)
(74) Vertreter: Dipl.-Ing. H. Hauck, Dipl.-Ing. E. Graalfs, Dipl.-Ing. W. Wehnert, Dr.-Ing. W. Döring

(57) **Zusammenfassung**

Verfahren zur Herstellung von Einkegelscheiben, insbesondere Abrichtscheiben, deren Grundkörper aus Stahl und deren Hauptseite und Kopf mit Hartstoffkörnern belegt sind, die mittels einer Metallbindung am Grundkörper festgelegt sind, wobei an der Rückseite des Kopfes eine Tasche geformt wird unter Belassung der metallgebundenen Hartstoffkornschicht und die Tasche anschließend mit Hartstoffkörnern gefüllt wird.

## Beschreibung

Die Erfindung bezieht sich auf ein Verfahren zur Herstellung von Einkegelscheiben, insbesondere Abrichtscheiben nach dem Oberbegriff des Patentanspruchs 1.

Bei diamantierten oder anderweitig mit Hartstoff belegten Scheiben der genannten Art wird nicht nur die Hauptseite (Evolventenseite) mit Hartstoff belegt, sondern auch die Rückseite im Kopfbereich, um einen Verschleißschutz zu bilden.

Ist ein solcher nicht vorgesehen, besteht die Gefahr, daß die Rückseite verschleißt, wodurch die Hartstoffschicht keine ausreichende Abstützung mehr im Kopfbereich erfährt.

Aus fertigungstechnischen Gründen darf der Radius des Kopfes derartiger Scheiben bei den bisher bekannten Werkzeugausführungen einen Mindestwert nicht unterschreiten. Werden zum Beispiel Einkegelabrichtscheiben für kleine Modulbereiche verwendet für zum Beispiel das Abrichten von Schleifschnecken, mit denen Zahnräder bearbeitet werden, werden bisher relativ kleine Körnungsgrößen für den Hartstoffbelag vorgesehen, um die für die kleinen Modulbereiche erforderlichen kleinen Radien bzw. Kofbreiten überhaupt herstellen zu können. Daraus resultierend ergeben sich gravierende Nachteile.

Eine relativ kleine Körnungsgröße hat naturgemäß nur eine begrenzte Standzeit zur Folge. Das Schleifverhalten einer Schleifschnecke hängt von der Anordnung und Schärfe der Schleifkörner auf der Schneidfläche ab. Eine kleine Körnungsgröße an der Abrichtscheibe führt zu einer entsprechend geringen Wirkrauhtiefe und mithin zu einer reduzierten Schleiffähigkeit der Schleifschnecke.

Der Erfindung liegt daher die Aufgabe zugrunde, ein Verfahren zur Herstellung von Einkegelscheiben, insbesondere Abrichtscheiben zu schaffen, das die oben genannten Nachteile behebt und eine Abrichtscheibe ermöglicht, die eine günstige Hartstoffbelegung aufweist mit entsprechend hoher Standmenge und Bearbeitungsqualität.

Diese Aufgabe wird durch die Merkmale des Patentanspruchs 1 gelöst.

Bei dem erfindungsgemäßen Verfahren wird von einem herkömmlichen Grundkörper ausgegangen, dessen Hauptseite (Evolventenseite) und Kopf mit Hartstoff, z.B. Diamantkörnern belegt ist. Nach der Belegung, z.B. Diamantierung wird an der Rückseite der Scheibe im Kopfbereich eine Tasche geformt. Nach einer Ausgestaltung der Erfindung kann dies durch ein herkömmliches Ätzverfahren erfolgen, durch Funkenerosion, elektrochemische Bearbeitung oder dergleichen. Alternativ kann auch ein spangebendes Verfahren eingesetzt werden. Wesentlich ist, daß die Hartstoffbelegung im Kopfbereich einschließlich der metallischen Bindung, die zum Beispiel durch Nickel gebildet ist, stehen bleibt. Anschließend wird die Tasche mit Hartstoffkörnern in metallischer Bindung gefüllt. Vorzugsweise ist die Körnungsgröße der in die Tasche gefüllten Diamantkörner geringer als die an der Hauptseite und im Kopfbereich.

Im Gegensatz zum herkömmlichen Verfahren kann indessen ein Radius am Kopf verwendet werden, der nahezu Null sein kann. Der Kopfbereich kann daher eine geringere Breite aufweisen, wodurch eine Belegung mit einer größeren Körnungsgröße möglich wird, um zu gleichen Abmessungen wie bei herkömmlichen Scheiben zu gelangen, bei denen eine weitaus geringere Körnungsgröße verwendet wird.

Das erfindungsgemäße Verfahren ermöglicht mithin einen schmalen Kopfbereich der Schleif- bzw. Abrichtscheibe, die gleichwohl eine hohe Schleiffähigkeit und Standmenge aufweist, da eine Hartstoffbelegung mit relativ großer Körnungsgröße möglich ist. Die dem Verschleiß ausgesetzte Rückseite des Kopfes ist durch Hartstoffüllung in der Tasche ausreichend geschützt, so daß der Schleifbelag im Kopfbereich zur Rückseite hin stets eine ausreichende Abstützung erfährt.

Die Erfindung wird nachfolgend anhand von Zeichnungen näher erläutert.
- Fig. 1: zeigt im Schnitt einen Abschnitt einer Abrichtscheibe in einem Formwerkzeug zur Diamantierung.
- Fig. 2: zeigt die Abrichtscheibe nach Fig. 1 mit herausgeformter Tasche im Kopfbereich.
- Fig. 3: zeigt die mit Diamanten aufgefüllte Tasche nach Fig. 2.

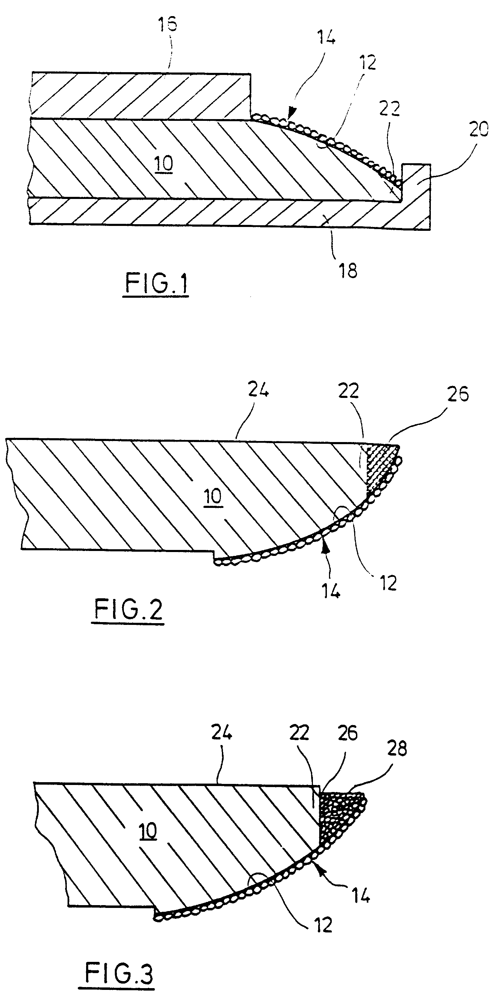

In Fig. 1 ist der äußere Abschnitt des Grundkörpers 10 einer kreisförmigen Einkegelabrichtscheibe dargestellt. Er besteht zum Beispiel aus Stahl. Die im Querschnitt leicht gebogene Hauptseite 12 ist mit einer Schicht 14 aus Diamanten in einer Metallbindung belegt. Die Metallbindung ist zum Beispiel durch Nickel gebildet. Das Belegen erfolgt galvanisch, wobei der Grundkörper 10 in eine Form gelegt wird mit den Formteilen 16, 18. Das Formteil 18 weist einen Ansatz 20 auf, gegen den sich gegen der Kopf 22 des Grundkörpers 10 anlegt.

Mit Hilfe eines geeigneten Verfahrens, wie es in der Fertigungstechnik bekannt ist, wird von der Rückseite 24 des Grundkörpers 10 im Kopfbereich 22 eine Tasche 26 geformt. In Fig. 2 ist die Tasche im Querschnitt gezeigt. Es versteht sich, daß sie um den gesamten Umfang der Scheibe herumläuft. Wie in Fig. 2 ferner zu erkennen, bleibt bei der Formung der Tasche 26 die Schicht 14 stehen.

In einem nächsten Schritt werden Diamantkörner in Nickelbindung eingefüllt, wie durch 28 in Fig. 3 angedeutet. Die Körnungsgröße der Diamantschicht 28 ist geringer als die des Diamantbelags 14.

Die Diamantkörner in der Tasche 26 bilden eine stabile Abstützung für die Diamantschicht 14 im Kopfbereich 22 und schützen die Rückseite vor einem abrasiven Verschleiß.

Anstelle von Diamantkörnern können andere Hartstoffe für die Belegung der Scheibe und das Auffüllen der Tasche verwendet werden, z.B. CBN oder dergleichen.

## Patentansprüche

1. Verfahren zur Herstellung von Einkegelscheiben, insbesondere Abrichtscheiben, deren Grundkörper aus Stahl und deren Hauptseite und Kopf mit Hartstoffkörnern belegt sind, die mittels einer Metallbindung am Grundkörper festgelegt sind, dadurch gekennzeichnet, daß an der Rückseite des Kopfes eine Tasche geformt wird unter Belassung der metallgebundenen Hartstoffkornschicht und die Tasche anschließend mit Hartstoffkörnern gefüllt wird.

2. Verfahren nach Anspruch 1, dadurch gekennzeichnet, daß der Hartstoff für die Taschen eine kleinere Körnungsgröße aufweist als der für die Hauptseite.

3. Verfahren nach Anspruch 1 oder 2, dadurch gekennzeichnet, daß die Tasche im Ätzverfahren geformt wird.

4. Verfahren nach Anspruch 1 oder 2, dadurch gekennzeichnet, daß die Tasche spangebend geformt wird.

5. Verfahren nach Anspruch 1 oder 2, dadurch gekennzeichnet, daß die Tasche durch Funkenerosion oder durch eine elektrochemische Bearbeitung geformt wird.
